# EUROPEAN PATENT SPECIFICATION

(11) **EP 2 506 618 B1**
(45) Date of publication and mention of the grant of the patent: **28.08.2019**
(21) Application number: 11160022.7
(22) Date of filing: 28.03.2011
(51) Int. Cl.: H04W 12/08, H04L 29/08

(54) **Communications system including trusted server to verify a redirection request and associated methods**
Kommunikationssystem mit zuverlässigem Server zur Prüfung eines Umlenkungsverfahrens und zugehörige Verfahren
Système de communication incluant un serveur sécurisé afin de vérifier une requête de redirection et procédés associés

(43) Date of publication of application: 03.10.2012
(73) Proprietor: BlackBerry Limited, Waterloo, ON N2K 0A7 (CA)
(72) Inventor: Son, Giyeong, Waterloo Ontario N2L 5Z5 (CA); Rogan, Michael, Waterloo Ontario N2L 5Z5 (CA); Whittington, Graeme, Mississauga Ontario L4W 0B4 (CA); Preiss, Bruno R., Waterloo Ontario N2L 5Z5 (CA); Bajar, David, Waterloo Ontario N2L 3L3 (CA)
(74) Representative: Fennell, Gareth Charles

(56) References cited:
- WO-A1-98/58315
- US-B1- 6 813 635

## Description

### Technical Field

The present disclosure relates to the field of communications, and, in particular, to communications systems.

### Background

Mobile wireless communications devices have become pervasive in today's society. Many individuals own such mobile wireless communications devices and use them on a daily basis, both for placing voice calls and for performing other tasks. For example, some mobile wireless communications devices may now provide connectivity with the Internet, and may allow access to e-mail accounts, instant messaging accounts, and social networking sites.

Service providers, such as host servers, together with intermediary networks, including intermediate servers, provide for the connectivity between these mobile wireless communications devices and other mobile wireless communications devices, as well as the internet. In addition, these host servers may provide for connectivity between the mobile wireless communications devices and e-mail servers. Due to the popularity of such mobile wireless communications devices, the host servers and the intermediate servers are often congested with traffic.

This congestion can cause degradation in the quality of service delivered to the mobile wireless communications devices (i.e. poor voice connections, dropped calls, slow data connections). In addition, due to congestion or network failures, it may be desirable for a mobile wireless communications device to disconnect from a service provider or host server, and connect to a new service provider or host server.

Consequently, it is desirable for the communications system as a whole to provide quick, efficient communications between the service providers or host servers and the mobile wireless communications devices, together with ways for the mobile wireless communications devices to disconnect from one service provider or host server and to connect to another service provider or host server. Therefore, new communications systems are still needed.

US 6,813,635 discloses system and method for distributing load among redundant independent stateful world wide web server sites.

### Brief Description of the Drawings

FIG. 1 is a schematic block diagram of a communications system in accordance with the present disclosure.
FIG. 2 is a schematic block diagram of a more detailed embodiment of a communications system in accordance with the present disclosure.
FIG. 3 is a block diagram showing routing of the redirect request in the communications system of FIG. 1 or FIG. 2.
Fig. 4 is a flowchart of a method of operating a communications system in accordance with the present disclosure.
FIG. 5 is a schematic block diagram of another embodiment of a communications system in accordance with the present disclosure.
FIG. 6 is a block diagram showing routing of the redirect request in the communications system of FIG. 5.
FIG. 7 is a schematic block diagram illustrating example components which may be used in the communications systems of FIG. 1, FIG. 2, and FIG. 5 in accordance with an example embodiment.

### Detailed Description

The invention is defined by the appended claims. The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to denote similar elements in alternative embodiments.

Generally speaking, a communications system may include a mobile wireless communications device, a trusted server, and a plurality of host servers. A given one of the host servers may be in communication with the mobile wireless communications device and may be configured to generate and send a redirection request for the mobile wireless communications device. The redirection request may request the mobile wireless communications device to communicate with an other one of the host servers. Further, the trusted server may be configured to receive the redirection request and send the redirection request to the mobile wireless communications device based upon verification of the redirection request. This advantageously increases security in the communications system, as the mobile wireless communications device does not connect to the other host server until that host server has been verified by the trusted server.

In some applications, the given one of said host servers may be configured to send the redirection request for said mobile wireless communications device to said mobile wireless communications device, and said mobile wireless communications device may be configured to send the redirection request to said trusted server.

In other applications, the communications system may include an intermediate server, and the given one of the host servers may be in communication with the mobile wireless communications device via the intermediate server. In addition, the given one of the host servers may be configured to generate and send the redirection request for the mobile wireless communications device to the intermediate server, and the redirection request may request the mobile wireless communications device to communicate with the other one of the host servers via the intermediate server. The intermediate server is configured to send the redirection request to the trusted server.

In some applications, the trusted server may verify the redirection request by querying the other host server for a host address associated therewith. Also, the trusted server may send the host address to the mobile wireless communications device.

The mobile wireless communications device may also be configured to connect to the other host server based upon the host address. The given host server may be configured to process at least one job request received from the mobile wireless communications device. The at least one job request may be an e-mail processing request or an Internet connectivity request, for example.

The other host server may be configured to process at least one job request received from the mobile wireless communications device. The at least one job request may be an e-mail processing request or an Internet connectivity request.

A method aspect is directed to a method of operating a communications system comprising a mobile wireless communications device, an intermediate server, a trusted server, and a plurality of host servers, a given one of the host servers in communication with the mobile wireless communications device via the intermediate server. The method may include generating and sending, using the given host server, a redirection request for the mobile wireless communications device to the intermediate server, the redirection request requesting the mobile wireless communications device to communicate with an other one of the host servers via the intermediate server. The method may also include sending, using the intermediate server, the redirection request to the trusted server. The method may further include sending, using the trusted server, the redirection request to the mobile wireless communications device based upon verification of the redirection request.

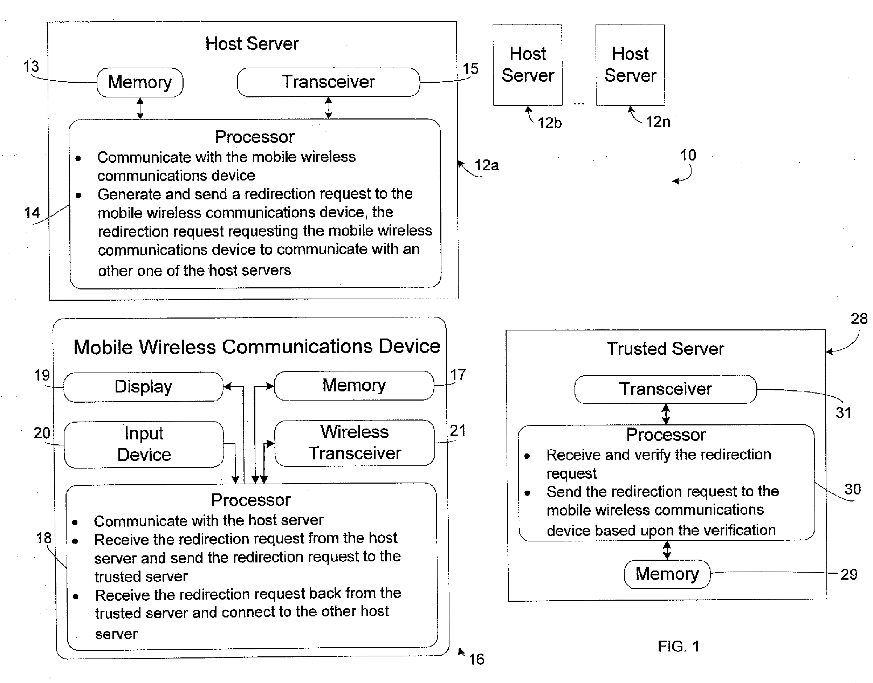

With reference to FIG. 1, a communications system **10** is now described. The communications system **10** includes a plurality of host servers **12a...12n,** a mobile wireless communications device **16,** and a trusted server **28.** A given host server **12a** illustratively includes a memory **13** and a transceiver **15,** both coupled to a processor **14.** It should be understood that the other host servers **12b...12n** may contain similar components, and therefore need no further description herein.

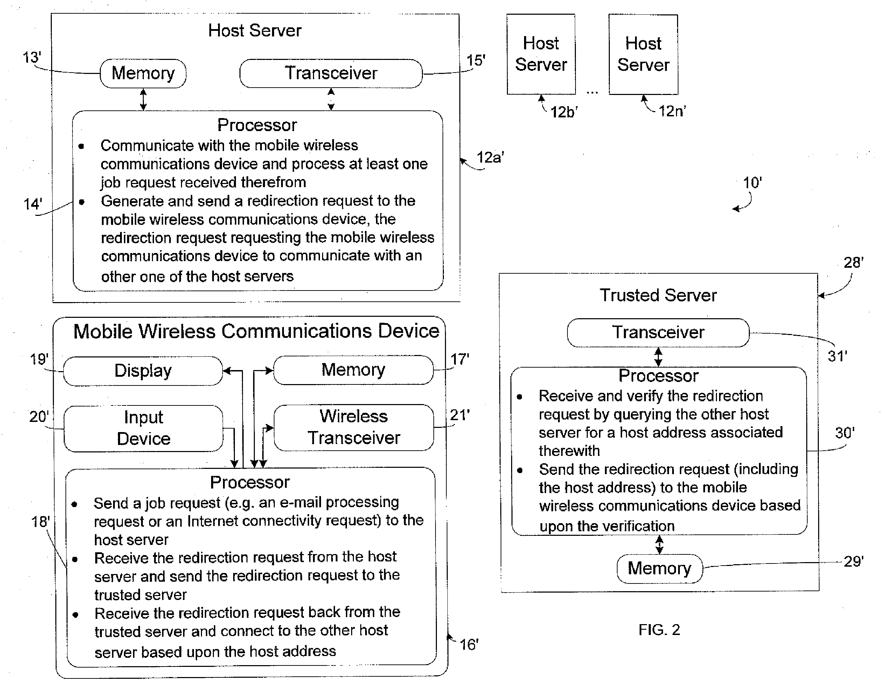

The processor **14** of the host server **12a** is configured to communicate with the mobile wireless communications device **16.** As shown in the more detailed embodiment of FIG. 2, the processor **14'** of the host server **12a'** may be configured to process at least one job request received from the mobile wireless communications device **16'.** This job request may be an e-mail processor request or an Internet connectivity request, for example.

Referring again to FIG. 1, the processor **14** is also configured to generate and send a redirection request for the mobile wireless communications device **16** to the mobile wireless communications device **16.**

The redirection request requests the mobile wireless communications device to communicate with an other one of the host servers **12b...12n.** In other words, the redirection request requests the mobile wireless communications device to cease communications with the host server **12a** and to instead communicate with an other host server of the host servers **12b...12n.** This may be done to help balance the load on the host servers **12a...12n** of the communications system **10,** for example.

The trusted server **28** includes a memory **29** and a transceiver **31** coupled to a processor **30.** The processor **30** of the trusted server **28** receives the redirection request from the mobile wireless communications device **16.** The processor **30** then verifies the redirection request, and sends the redirection request back to the mobile wireless communications device **16** based upon that verification. This advantageously increases the security in the communications system **10,** as the trusted server **28** verifies the other server before mobile wireless communications device **16** connects thereto. Verification is useful because, in some situations, a malicious host can send a redirection request on behalf of the host server **12a** to the mobile wireless communications device **16.** Without the trusted server **28** to verify such a redirection request, the mobile wireless communications device **16** could redirect to this malicious host and therefore be compromised.

Verification of the redirection request can also increase the quality of service delivered to the mobile wireless communications device **16.** If the host server that the redirection request requests the mobile wireless communications device **16** is not experiencing technical difficulties, the trusted server **28** may not verify that host server, and thus the mobile wireless communications device may be saved from attempting to connect to that host server, when connecting to that host server might have caused poor quality of service to be delivered to the mobile wireless communications device.

As shown in the more detailed embodiment of FIG. 2, the processor **30'** of the trusted server **28'** may verify the redirection request by querying the other host server for a host address associated therewith. The processor **30'** may then compare the host address to a list of known safe host addresses, for example, or may perform other verification operations on the host address. When sending the redirection request to the mobile wireless communications device **16',** the processor **30'** may include the host address.

Referring once again to FIG. 1, the mobile wireless communications device **16** includes a memory **17,** a display **19,** an input device **20,** and a wireless transceiver **21** all coupled to a processor **18.** The memory **13** may include both volatile and non-volatile portions, for example. The input device **20** may be a keyboard, a touchpad, a trackball, or a combination thereof. In addition, it should be understood that the display **19** may be a touch sensitive display and may function as the input device **20,** in some applications.

As explained above, the processor **18** of the mobile wireless communications device **16** communicates with the host server **12a.** The processor **18** receives the redirection request from the trusted server **28** and connects to an other host server **12b...12n.**

As shown in the more detailed embodiment of Fig. 2, the processor **18'** of the mobile wireless communications device **16'** may send the job request to the host server **12a'.** As explained above, this job request may be an e-mail processing request or an Internet connectivity request. This job request may also be another type of job request, such as a voice call request. In addition, the processor **18'** may send the job request based upon input received via the input device **20',** or automatically based upon an operating condition of the mobile wireless communications device **16'.** It should be further appreciated that, after redirection, the processor **18'** of the mobile wireless communications device **16'** may send a job request to the host server to which it was redirected. This host server may then process the job.

Referring briefly again to FIG. 1, those skilled in the art will appreciate that the memories **13, 24, 29** may include both volatile and non-volatile portions. In addition, the transceivers **15, 26, 28** may be wired transceivers, wireless transceivers, or both.

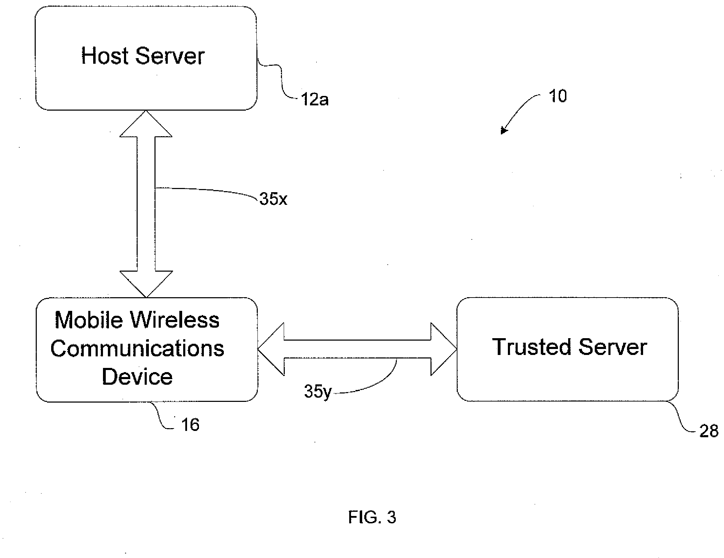

The routing of the redirection request is perhaps shown best in FIG. 3. As illustrated, the host server **12a** generates and sends the redirection request to the mobile wireless communications device **16** via a first communications path **35x.** The mobile wireless communications device **16** then sends the redirection request to the trusted server **28** via a second communications path **35y.** The trusted server **28,** after verifying the redirection request, sends it back to the mobile wireless communications device **16.**

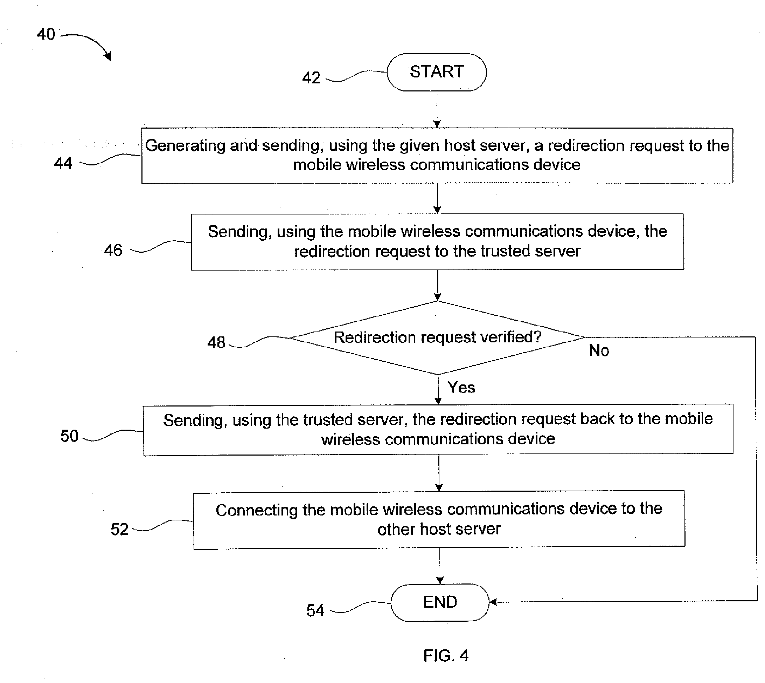

With reference to the flowchart **40** of FIG. 4, a method of operating the communications system of FIG. 1 is now described. After the start (Block **42**), the host server **12a** generates and sends a redirection request to the mobile wireless communications device **16** (Block **44**). Next, the mobile wireless communications device **16** sends the redirection request to the trusted server **28** (Block **46**).

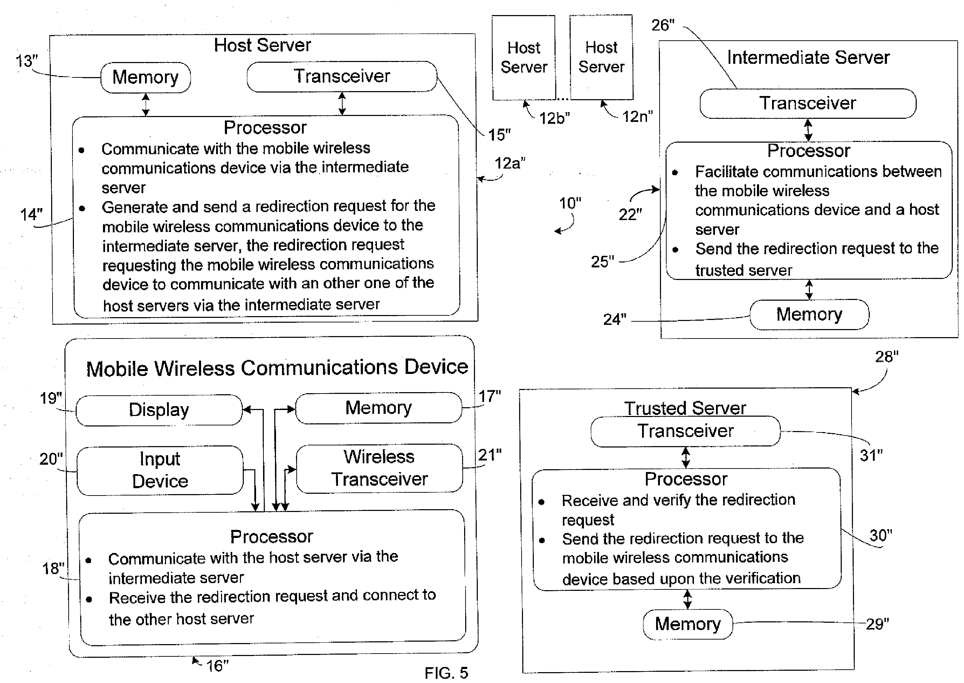

At Block **48,** the trusted server **28** verifies the redirection request, and, if it is verified, sends it back to the mobile wireless communications device **16** at Block **50.** The mobile wireless communications device **16** then connects to one of the other host servers **12b...12n.** Block **54** indicates the end of the method. It should be noted that if the redirection request is not verified at Block **48,** the method thereafter ends (Block **54**). It should be appreciated that some embodiments of the communications system **10"** may include an intermediate server **22",** as shown in FIG. 5. Here, the processor **14"** of the host server **12a"** is configured to communicate with the mobile wireless communications device **16"** via the intermediate server **22".** That is, the intermediate server **22"** provides a communications path between the host server **12a"** and the mobile wireless communications device **16".** The processor **14"** is also configured to generate and send a redirection request for the mobile wireless communications device **16"** to the intermediate server **22".** The redirection request requests the mobile wireless communications device to communicate with an other one of the host servers **12b"...12n"** via the intermediate server **22".**

The intermediate server **22"** includes a memory **24"** and a transceiver **26"** coupled to a processor **25".** The processor **25"** of the intermediate server **22"** is configured to facilitate communications between the mobile wireless communications device **16",** as explained above, and the host server **12a"** The processor **25"** receives the redirection request from the host server **12a",** and sends the redirection request to the trusted server **28"**.

In addition, it should be understood that in this embodiment the processor **30"** of the trusted server **28"** receives the redirection request from the intermediate server **22".**

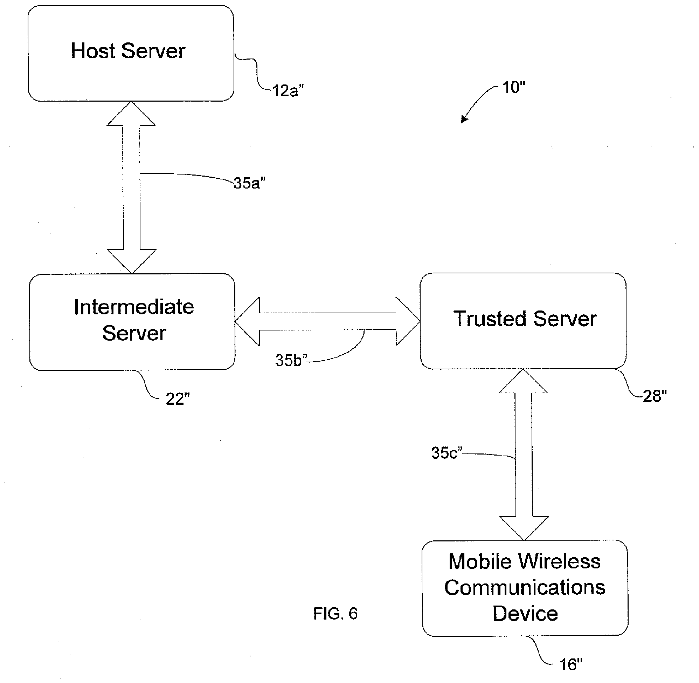

The routing of the redirection request in this embodiment is perhaps shown best in FIG. 6. As illustrated, the host server **12a"** generates and sends the redirection request to the intermediate server **22"** via a first communications path **35a".** The intermediate server **22"** then sends the redirection request to the trusted server **28"** via a second communications path **35b".** The trusted server **28",** after verifying the redirection request, sends it to the mobile wireless communications device **16"** via a third communications path **35c".**

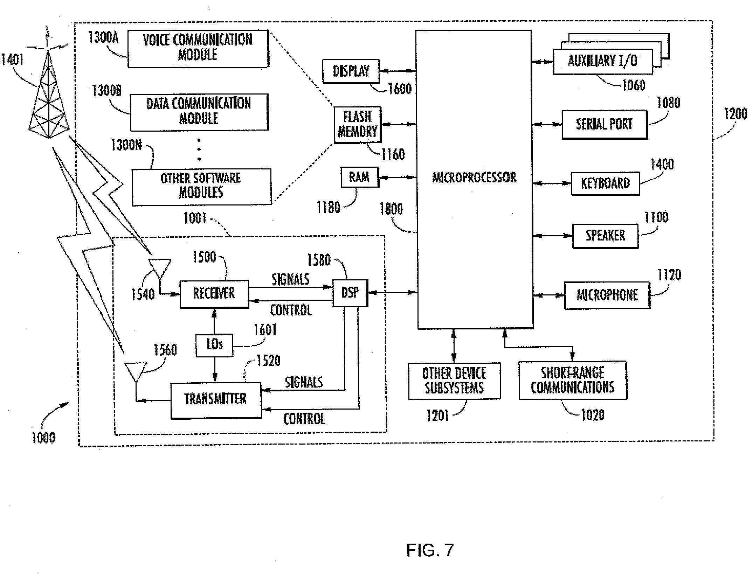

Example components of a mobile wireless communications device **1000** that may be used in accordance with the above-described embodiments are further described below with reference to FIG. 7. The mobile wireless communications device **1000** may function as either the electronic device described above, or the personal information token as described above. The device **1000** illustratively includes a housing **1200,** a keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.** Alternatively or additionally, the keypad **1400** may be a "soft" keypad implemented, for example, by providing images of keys on the display **1600.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as voice and data communications **1300A** and **1300B,** may be installed on the device **1000** during manufacture. In addition, a personal information manager (PIM) application may be installed during manufacture (not shown). The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary input/output (I/O) device **1060.** A device may also be used to compose data items, such as e-mail messages, using the keypad **1400** and/or some other auxiliary I/O device **1060,** such as a trackball, a touchpad, a rocker switch, a thumb-wheel, touch sensitive display or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A communications system **10** comprising:
a mobile wireless communications device **16;**
a trusted server **28;** and
a plurality of host servers **12a...12n,** a given one of said host servers in communication with said mobile wireless communications device and configured to generate and send a redirection request for said mobile wireless communications device, the redirection request requesting the mobile wireless communications device to communicate with an other one of said host servers;
said trusted server configured to receive the redirection request and to send the redirection request to said mobile wireless communications device based upon verification of the redirection request by querying said other host server for a host address associated therewith; and wherein the given one of said host servers **12a...12n** is configured to send the redirection request for said mobile wireless communications device **16** to said mobile wireless communications device; and wherein said mobile wireless communications device is configured to send the redirection request to said trusted server **28**

2. The communications device **10"** of Claim 1 further comprising an intermediate server **22";** wherein the given one of said host servers **12a"...12n"** is in communication with said mobile wireless communications device **16"** via said intermediate server; wherein the given one of said host servers is configured to generate and send the redirection request for said mobile wireless communications device to said intermediate server; wherein the redirection request requests said mobile wireless communications device to communicate with the other one of said host servers via said intermediate server; and wherein said intermediate server is configured to send the redirection request to said trusted server.

3. The communications system **10'** of Claim 1 wherein said trusted server **28'** sends the host address to said mobile wireless communications device **16'.**

4. The communications system **10'** of Claim 1 wherein said given host server **12a'...12n'** is configured to process at least one job request received from said mobile wireless communications device **16'.**

5. The communications system **10'** of Claim 1 wherein said other host server **12a'...12n'** is configured to process at least one job request received from said mobile wireless communications device **16'.**

6. The communications system **10'** of claim 1 wherein:
said given one of said host servers is further configured to: process at least one job request received from said mobile wireless communications device; and send the redirection request to said mobile wireless communications device;
said mobile wireless communications device is further configured to send the redirection request to said trusted server; and
said trusted server is further configured to:
receive the redirection request from said mobile wireless communications device; verify the redirection request by querying said other host server for a host address associated therewith; and send the redirection request back to said mobile wireless communications device based upon the verification.

7. The communications system **10'** of Claim 6 wherein said trusted server **28'** sends the host address to said mobile wireless communications device **16'.**

8. The communications system **10'** of Claim 7 wherein said mobile wireless communications device **16'** is also configured to connect to said other host server **12a...12n** based upon the host address.

9. A method of operating a communications system **10** comprising a mobile wireless communications device **16,** a trusted server **28,** and a plurality of host servers **12a...12n,** a given one of the host servers in communication with the mobile wireless communications device, the method comprising:
generating and sending, using the given host server, a redirection request to the mobile wireless communications device, the redirection request requesting the mobile wireless communications device to communicate with an other one of the host servers via;
sending, using the mobile wireless communications device, the redirection request to the trusted server; and
sending, using the trusted server, the redirection request to the mobile wireless communications device based upon verification of the redirection request, wherein the trusted server **28** verifies the redirection request by querying the other host server **12a...12n** for a host address associated therewith.

10. The method of Claim 9 wherein the trusted server sends **28** the host address to the mobile wireless communications device **16.**

11. The method of Claim 10 wherein the mobile wireless communications device **16** connects to the other host server **12a...12n** based upon the host address.

12. The method of Claim 9 further comprising processing, using the given host server **12a...12n,** at least one job request received from the mobile wireless communications device **16.**

## Patentansprüche

1. Kommunikationssystem 10, umfassend:
eine mobile drahtlose Kommunikationsvorrichtung 16;
einen vertrauenswürdigen Server 28; und
eine Vielzahl von Host-Servern 12a...12n, wobei ein bestimmter von den Host-Servern mit der mobilen drahtlosen Kommunikationsvorrichtung in Verbindung steht und dazu konfiguriert ist, eine Umleitungsanforderung für die mobile drahtlose Kommunikationsvorrichtung zu erzeugen und zu senden, wobei die Umleitungsanforderung die mobile drahtlose Kommunikationsvorrichtung auffordert, mit einem anderen der Hostserver zu kommunizieren;
wobei der vertrauenswürdige Server dazu konfiguriert ist, die Umleitungsanforderung zu empfangen und die Umleitungsanforderung basierend auf der Überprüfung der Umleitungsanforderung durch Abfragen des anderen Hostservers nach einer diesem zugeordneten Hostadresse an die mobile drahtlose Kommunikationsvorrichtung zu senden; und wobei der bestimmte der Hostserver 12a...12n dazu konfiguriert ist, die Umleitungsanforderung für die mobile drahtlose Kommunikationsvorrichtung 16 an die mobile drahtlose Kommunikationsvorrichtung zu senden; und wobei die mobile drahtlose Kommunikationsvorrichtung dazu konfiguriert ist, die Umleitungsanforderung an den vertrauenswürdigen Server 28 zu senden.

2. Kommunikationsvorrichtung 10" nach Anspruch 1, ferner umfassend einen Zwischenserver 22"; wobei der bestimmte von den Hostservern 12a"...12n" mit der mobilen drahtlosen Kommunikationsvorrichtung 16" über den Zwischenserver in Verbindung steht; wobei der bestimmte von den Hostservern dazu konfiguriert ist, die Umleitungsanforderung für die mobile drahtlose Kommunikationsvorrichtung zu erzeugen und an den Zwischenserver zu senden; wobei die Umleitungsanforderung die mobile drahtlose Kommunikationsvorrichtung auffordert, mit dem anderen der Hostserver über den Zwischenserver zu kommunizieren; und wobei der Zwischenserver dazu konfiguriert ist, die Umleitungsanforderung an den vertrauenswürdigen Server zu senden.

3. Kommunikationssystem 10' nach Anspruch 1, wobei der vertrauenswürdige Server 28' die Hostadresse an die mobile drahtlose Kommunikationsvorrichtung 16' sendet.

4. Kommunikationssystem 10' nach Anspruch 1, wobei der bestimmte Hostserver 12a'...12n' dazu konfiguriert ist, mindestens eine von der mobilen drahtlosen Kommunikationsvorrichtung 16' empfangene Jobanforderung zu verarbeiten.

5. Kommunikationssystem 10' nach Anspruch 1, wobei der andere Hostserver 12a'...12n' dazu konfiguriert ist, mindestens eine von der mobilen drahtlosen Kommunikationsvorrichtung 16' empfangene Jobanforderung zu verarbeiten.

6. Kommunikationssystem 10' nach Anspruch 1, wobei:
der bestimmte von den Hostservern ferner konfiguriert ist, um: mindestens eine von der mobilen drahtlosen Kommunikationsvorrichtung empfangenen Jobanforderung zu verarbeiten; und die Umleitungsanforderung an die mobile drahtlose Kommunikationsvorrichtung zu senden;
die mobile drahtlose Kommunikationsvorrichtung ferner dazu konfiguriert ist, die Umleitungsanforderung an den vertrauenswürdigen Server zu senden; und
der vertrauenswürdige Server ferner konfiguriert ist, um: die Umleitungsanforderung von der mobilen drahtlosen Kommunikationsvorrichtung zu empfangen; die Umleitungsanforderung zu überprüfen, indem der andere Hostserver nach einer diesem zugeordneten Hostadresse angefragt wird; und die Umleitungsanforderung basierend auf der Überprüfung an die mobile drahtlose Kommunikationsvorrichtung zurückzusenden.

7. Kommunikationssystem 10' nach Anspruch 6, wobei der vertrauenswürdige Server 28' die Hostadresse an die mobile drahtlose Kommunikationsvorrichtung 16' sendet.

8. Kommunikationssystem 10' nach Anspruch 7, wobei die mobile drahtlose Kommunikationsvorrichtung 16' ferner dazu konfiguriert ist, sich basierend auf der Hostadresse mit dem anderen Hostserver 12a...12n zu verbinden.

9. Verfahren zum Betreiben eines Kommunikationssystems 10, das eine mobile drahtlose Kommunikationsvorrichtung 16, einen vertrauenswürdigen Server 28 und eine Vielzahl von Hostservern 12a...12n umfasst, wobei ein bestimmter von den Hostservern in Verbindung mit der mobilen drahtlosen Kommunikationsvorrichtung steht, das Verfahren umfassend:
Erzeugen und Senden, unter Verwendung des bestimmten Hostservers, einer Umleitungsanforderung an die mobile drahtlose Kommunikationsvorrichtung, wobei die Umleitungsanforderung die mobile drahtlose Kommunikationsvorrichtung auffordert, mit einem anderen der Hostserver zu kommunizieren;
Senden, unter Verwendung der mobilen drahtlosen Kommunikationsvorrichtung, der Umleitungsanforderung an den vertrauenswürdigen Server; und
Senden, unter Verwendung des vertrauenswürdigen Servers, der Umleitungsanforderung, basierend auf der Überprüfung der Umleitungsanforderung, an die mobile Kommunikationsvorrichtung, wobei der vertrauenswürdige Server 28 die Umleitungsanforderung überprüft, indem er den anderen Hostserver 12a...12n nach einer diesem zugeordneten Hostadresse anfragt.

10. Verfahren nach Anspruch 9, wobei der vertrauenswürdige Server die Hostadresse 28 an die mobile drahtlose Kommunikationsvorrichtung 16 sendet.

11. Verfahren nach Anspruch 10, wobei sich die mobile drahtlose Kommunikationsvorrichtung 16 mit dem anderen Hostserver 12a...12n basierend auf der Hostadresse verbindet.

12. Verfahren nach Anspruch 9, ferner umfassend das Verarbeiten, unter Verwendung des bestimmten Hostservers 12a...12n, mindestens einer von der mobilen drahtlosen Kommunikationsvorrichtung 16 empfangenen Jobanforderung.

## Revendications

1. Système de communications (10) comprenant :
un dispositif de communications sans fil mobile (16) ;
un serveur de confiance (28) ; et
une pluralité de serveurs hôtes (12a...12n), l'un donné desdits serveurs hôtes étant en communication avec ledit dispositif de communications sans fil mobile et configuré pour générer et envoyer une demande de redirection pour ledit dispositif de communications sans fil mobile, la demande de redirection demandant au dispositif de communications sans fil mobile de communiquer avec un autre desdits serveurs hôtes ;
ledit serveur de confiance étant configuré pour recevoir la demande de redirection et pour envoyer la demande de redirection audit dispositif de communications sans fil mobile sur la base de la vérification de la demande de redirection en interrogeant ledit autre serveur hôte pour une adresse hôte qui lui y est associée ; et où le serveur donné desdits serveurs hôtes (12a...12n) est configuré pour envoyer la demande de redirection pour ledit dispositif de communications sans fil mobile (16) audit dispositif de communications sans fil mobile ; et où ledit dispositif de communications sans fil mobile est configuré pour envoyer la demande de redirection audit serveur de confiance (28).

2. Dispositif de communications (10") selon la revendication 1, comprenant en outre un serveur intermédiaire (22") ; dans lequel le serveur donné desdits serveurs hôtes (12a"...12n") est en communication avec ledit dispositif de communications sans fil mobile (16") via ledit serveur intermédiaire ; dans lequel le serveur donné desdits serveurs hôtes est configuré pour générer et envoyer la demande de redirection pour ledit dispositif de communications sans fil mobile audit serveur intermédiaire ; dans lequel la demande de redirection demande audit dispositif de communications sans fil mobile de communiquer avec l'autre desdits serveurs hôtes via ledit serveur intermédiaire ; et dans lequel ledit serveur intermédiaire est configuré pour envoyer la demande de redirection audit serveur de confiance.

3. Système de communications (10') selon la revendication 1, dans lequel ledit serveur de confiance (28') envoie l'adresse hôte audit dispositif de communication sans fil mobile (16').

4. Système de communications (10') selon la revendication 1, dans lequel ledit serveur hôte donné (12a'...12n') est configuré pour traiter au moins une demande de tâche reçue dudit dispositif de communications sans fil mobile (16').

5. Système de communications (10') selon la revendication 1, dans lequel ledit autre serveur hôte (12a'...12n') est configuré pour traiter au moins une demande de tâche reçue dudit dispositif de communications sans fil mobile (16').

6. Système de communications (10') selon la revendication 1, dans lequel :
ledit serveur donné desdits serveurs hôtes est en outre configuré pour : traiter au moins une demande de tâche reçue dudit dispositif de communications sans fil mobile ; et envoyer la demande de redirection audit dispositif de communications sans fil mobile ;
ledit dispositif de communications sans fil mobile est en outre configuré pour envoyer la demande de redirection audit serveur de confiance ; et
ledit serveur de confiance est en outre configuré pour : recevoir la demande de redirection en provenance dudit dispositif de communications sans fil mobile ; vérifier la demande de redirection en interrogeant ledit autre serveur hôte pour une adresse hôte qui lui est associée ; et renvoyer la demande de redirection audit dispositif de communications sans fil mobile sur la base de la vérification.

7. Système de communications (10') selon la revendication 6, dans lequel ledit serveur de confiance (28') envoie l'adresse hôte audit dispositif de communications sans fil mobile (16').

8. Système de communications (10') selon la revendication 7, dans lequel ledit dispositif de communications sans fil mobile (16') est également configuré pour se connecter audit autre serveur hôte (12a...12n) sur la base de l'adresse hôte.

9. Procédé d'exploitation d'un système de communications (10) comprenant un dispositif de communications sans fil mobile (16), un serveur de confiance (28), et une pluralité de serveurs hôtes (12a...12n), l'un donné des serveurs hôtes étant en communication avec le dispositif de communications sans fil mobile, le procédé comprenant les étapes consistant à :
générer et envoyer, en utilisant le serveur hôte donné, une demande de redirection au dispositif de communications sans fil mobile, la demande de redirection demandant au dispositif de communications sans fil mobile de communiquer avec un autre des serveurs hôtes via ;
l'envoi, en utilisant le dispositif de communications sans fil mobile, de la demande de redirection au serveur de confiance ; et
l'envoi, en utilisant le serveur de confiance, de la demande de redirection au dispositif de communications sans fil mobile sur la base de la vérification de la demande de redirection, où le serveur de confiance (28) vérifie la demande de redirection en interrogeant l'autre serveur hôte (12a...12n) pour une adresse hôte qui lui est associée.

10. Procédé selon la revendication 9, dans lequel le serveur de confiance (28) envoie l'adresse hôte au dispositif de communications sans fil mobile (16).

11. Procédé selon la revendication 10, dans lequel le dispositif de communications sans fil mobile (16) se connecte à l'autre serveur hôte (12a...12n) sur la base de l'adresse hôte.

12. Procédé selon la revendication 9, comprenant en outre le traitement, en utilisant le serveur hôte donné (12a...12n), d'au moins une demande de tâche reçue du dispositif de communications sans fil mobile (16).
